# EUROPEAN PATENT APPLICATION

(11) **EP 2 824 899 A1**
(43) Date of publication of application: **14.01.2015**
(21) Application number: 13305992.3
(22) Date of filing: 12.07.2013
(51) Int. Cl.: H04M 1/725, G06F 3/041, G06F 3/044, G06F 1/16

(54) **Method of initializing a wireless communication between a device and a terminal having a touch screen**

(71) Applicant: Gemalto SA, 92190 Meudon (FR)
(72) Inventor: Chafer, Sylvain, 92190 Meudon (FR); Blochet, Marc, 92190 Meudon (FR); Marseille, François-Xavier, 92190 Meudon (FR)
(74) Representative: Cour, Pierre

(57) **Abstract**

The invention relates to a method for establishing a wireless communication channel between a communication device 7 and a communication terminal 1 comprising a touch screen 2. A first communication is established through the touch screen for exchanging setting information of a wireless communication channel. Then the communication unit 5 of the terminal and/or 10 of the communication device is/are configured and the wireless communication channel is established.

An implementation might be a method for establishing a Bluetooth low energy link between a communication terminal with a touch screen and a communication device with a tactile actuator, whereby in order to initiate a Bluetooth link between the device and the terminal the communication device is put onto the touch screen of the terminal and applies a tactile signal to the touch screen and the terminal answers by emitting a visual signal via the touch screen to the communication device.

## Description

### TECHNICAL FIELD

The present invention relates to a method of initializing a wireless communication between a device and a terminal having a touch screen. The present invention also concerns devices to implement such method.

### BACKGROUND

Today, more and more communication devices need to communicate with communication terminals such as PC, Tablets and Mobile Phones. This communication is challenging as the mean to interface with these devices, in particular tablets and mobile phone, is heterogeneous and is using more and more proprietary connectors or protocols.

A way to deal with this issue is to use an interface common to all these devices and having homogeneous capabilities widely shared among them. Bluetooth Low-Energy wireless link is such an interface and it is starting to be very common in Tablets and Mobile Phones, mainly for two reasons: it generally comes for free with the 'legacy' Bluetooth capability and it opens the world of sensors.

However, currently, Bluetooth Low-Energy usage is suffering a major flaw: today when a user wants to connect a device to his tablet/handset by Bluetooth low energy, his handset/tablet has to scan for available devices and to display them to the user. The user has then to recognize the device he is interested in, to select it and to ask for connection. That process of scanning for available devices is not very secure and not user friendly.

### SUMMARY OF THE INVENTION

The technical problem to solve is then to provide a method to start a Bluetooth low energy link, and more generally a method to start a wireless communication channel, between a communication terminal and a communication device, that is secure, simple and user friendly.

To this purpose, the invention suggests to start a wireless communication between one terminal having a touch screen and one device by just putting the device on the touch screen of the terminal. The device and the terminal exchange then automatically the data needed to establish the wireless communication through the touch screen of the terminal during the contact between the device and the touch screen. The user has then nothing to do to start the wireless communication between the terminal and the device except putting the device on the touch screen of the terminal.

More precisely, one aspect of the invention relates to a method for establishing a wireless communication channel between a communication device and a communication terminal, the communication device comprising a communication unit and an exchanging interface for communicating with a touch screen, the communication terminal comprising a touch screen and a communication unit able to be linked by a wireless communication channel to the communication unit of the communication device. The method comprises the following steps:
- Putting the communication device in contact with the touch screen;
- Exchanging data between the communication device and the communication terminal through the touch screen;
- Configuring at least one of the communication units with at least some of the exchanged data;
- Establishing a communication channel between the communication unit of the communication terminal and the communication unit of the communication device.

The method according to the invention enables to start a wireless communication between a communication device and a communication terminal by just putting the communication device on the touch screen of the communication terminal. All the information needed to initialize the communication channel are exchanged between the communication device and the communication terminal via the touch screen of the communication terminal when the communication device contacts the touch screen. This method allows then establishing a secure wireless link:
- without pre-pairing of the devices to connect;
- with no pre shared secret between the devices;
- using an out of band channel preventing sniffing from an attacker;
- with very good user convenience since the user has nothing to configure or to setup.

The wireless communication channel presents preferably one or several of the following features:
- it is preferably an bidirectional communication channel;
- it is preferably a Bluetooth low energy link.

The method according to the invention can also comprise one or several of the following features, taken individually or according to all possible technical combinations.

Advantageously, the communication device comprises an exchanging interface configured to exchange information with the communication terminal through the touch screen.

Advantageously, the step of putting the communication device in contact with the touch screen is a step of putting the exchanging interface of the communication device in contact with the touch screen.

Advantageously, the step of exchanging data through the touch screen comprises a step of receiving uplink data encoded in a tactile signal applied to the touch screen.

In this document, we call "tactile signal" a signal that transmits information by touch emulation on a touch screen and preferably by varying the contact, either electrically or physically, with the touch screen. For example, the data can be encoded in a tactile signal by the duration of touch, and/or the location of touch, and/or it can be encoded in a character based form, and/or in a frame based form... A tactile signal enables to transmit input data through a touch screen.

Advantageously, the step of exchanging data comprises a step of sending downlink data encoded in a visual signal emitted by the touch screen.

A "visual signal" is a signal emitted by a screen. It is generally a light signal. The data in a visual signal can be encoded by varying the duration of a flash of light and/or the location of a flash of light, and/or by any kind of light modulation.

In this document, we call "uplink data" the data coming from the communication device toward the communication terminal and we call "downlink data" the data coming from the communication terminal toward the communication device.

The uplink data and/or the downlink data may comprise one or several of the following information:
- A name of the communication device;
- An address of the communication device;
- a name of the communication terminal;
- an address of the communication terminal;
- At least one encryption key enabling to encrypt the communication between the communication terminal and the communication device.

According to different embodiments, the step of configuring at least one of the communication units can be:
- A step of configuring the communication unit of the communication terminal; or
- A step of configuring the communication unit of the communication device; or
- A step of configuring the communication unit of the communication terminal and the communication unit of the communication device.

A second aspect of the invention concerns a communication terminal comprising means to implement a method according to the first aspect of the invention.

The communication terminal comprises preferably:
- A communication unit able to be connected to a communication unit of a communication device through a wireless communication channel;
- A touch screen;
- An exchanging unit configured to exchange data through the touch screen with a communication device in contact with the touch screen;
- An initialization unit configured to configure at least one of the communication units with at least some of the exchanged data in order to establish a wireless communication channel between the communication unit of the communication terminal and the communication unit of the communication device.

According to different embodiments, the initialization unit of the communication terminal can be configured to configure:
- Only the communication unit of the communication terminal; or
- Only the communication unit of the communication device; or
- The communication unit of the communication terminal and the communication unit of the communication device.

The communication terminal can be a mobile phone, a tablet, a handset...

A third aspect of the invention concerns a communication device comprising means to implement the method according to the third aspect of the invention.

This communication device comprises preferably:
- A communication unit configured to be connected to a communication unit of a communication terminal comprising a touch screen through a wireless communication channel;
- An exchanging interface configured to exchange data with the communication terminal through the touch screen
- An initialization unit configured to configure at least one of the communication units with at least some of the exchanged data in order to establish a wireless communication channel between the communication unit of the communication terminal and the communication unit of the communication device. As a matter of fact, at least one of the communication units needs to be configured so that the communication units are linked together by the wireless communication channel.

According to a preferred embodiment, the initialization unit of the communication terminal is configured to configure the communication unit of the communication terminal, while the initialization unit of the communication device is configured to configure the communication unit of the communication device.

The invention enables then to establish a wireless communication channel between any communication terminal with a touch screen and any device very easily and in a very secure way, with no need to make complex configuration, with no need of pre-shared secret deployment, with non observable OOB channel since the user has just to put the device on the touch screen of the terminal to start the communication.

### BRIEF DESCRIPTION OF THE DRAWINGS

Figure 1 represents a communication terminal implementing a method of establishing a wireless communication with a communication device according to one embodiment of the invention.
Figure 2 represents a communication device implementing a method of asking for the establishment of a wireless communication with a communication device according to one embodiment of the invention.
Figure 3 represents the steps of the method according to one embodiment of the invention.

### DETAILED DESCRIPTION

The present invention will now be described with reference to the accompanying drawings. The drawings are intended to provide one example of how the invention can be implemented and are not intended to limit the applicability of the present invention.

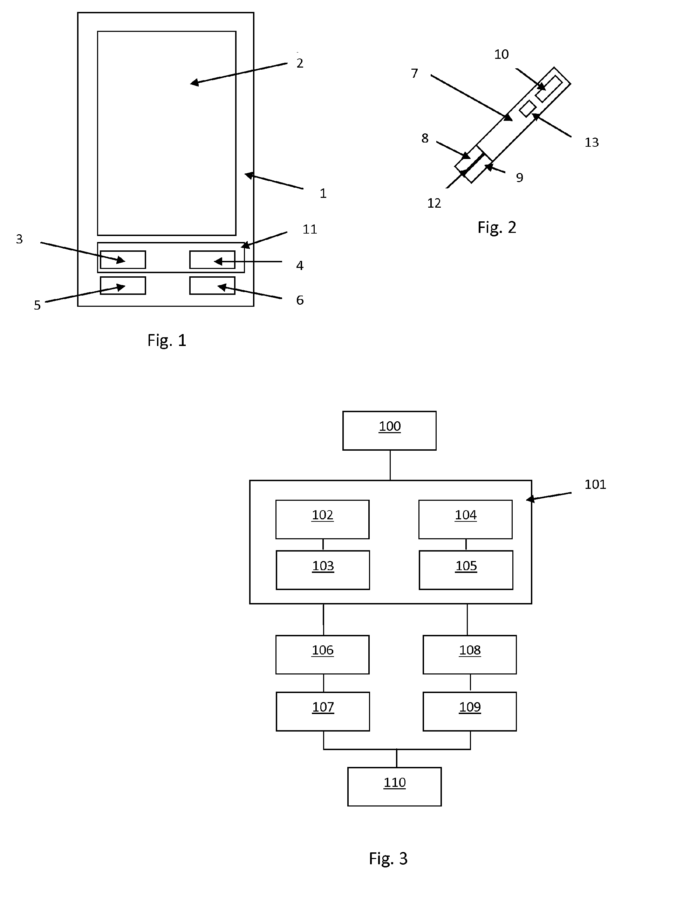

Figure 1 represents a communication terminal 1 according to one embodiment of the invention. That communication terminal 1 is configured to implement a method of establishing a wireless communication with a communication device according to one embodiment of the invention.

The communication terminal 1 can be a mobile phone, a tablet or a handset. The communication terminal 1 comprises a touch screen 2. The touch screen can be resistive or capacitive. The touch screen 2 comprises an area used as exchanging unit 11 configured to exchange data with a device in contact with the touch screen. A method of exchanging data through the touch screen that can be used to that purpose is more precisely described in the patent application EP n° 11306814.2.

The exchanging unit 11 preferably comprises an input unit 3 and to an output unit 4. The input unit 3 is configured to receive information via the touch screen 1. To that purpose, the input unit 3 can receive data encoded in tactile signals applied to the touch screen 1. The output unit 4 is configured to send information via the touch screen 1. To that purpose, the output unit 4 is configured to send data encoded in visual signals emitted by the touch screen.

The communication terminal 1 also comprises a communication unit 5 configured to connect the communication terminal 1 by a wireless communication channel to a communication device, and more precisely to a communication unit of a communication device. The wireless communication channel is preferably a Bluetooth low energy link.

The communication terminal 1 also comprises an initialization unit 6 configured to configure the communication unit 5 in order to establish a wireless communication channel between the communication unit 5 and a communication unit of a given communication device.

Figure 2 represents a communication device 7 according to one embodiment of the invention. The communication device 7 can be a token, a stylus, a mobile phone, a tablet, a display card...

The communication device 7 comprises a communication unit 10 able to be connected by a wireless communication channel to the communication unit 5 of the communication terminal 1.

The communication device 7 also comprises an exchanging interface 12 configured to exchange data through a touch screen of another device like the communication terminal 1.

The exchanging interface 12 comprises a sending interface 8 configured to send data encoded in tactile signals when the sending interface 8 is put in contact with the touch screen 2 of the communication terminal 1. To that purpose, the sending interface 8 can encode data in the form of duration of touch and/or location on touch and/or on a character based encoding and/or on a frame based encoding.

The exchanging interface 12 also comprises a receiving interface 9 configured to receive data encoded in visual signal emitted by the touch screen 2 of the communication terminal 2. The communication device 7 may also comprise a initialization unit 13 configured to configure at least one the communication units 5, 10 with at least some of the exchanged data.

A method according to one embodiment of the invention for initializing a wireless communication channel and more precisely a Bluetooth low energy link, between the communication terminal 1 of figure 1 and the communication device 7 of figure 2 will now be described in reference with figure 3.

The method of initializing the wireless communication channel comprises first a step 100 of putting the communication device 7, and more precisely the sending interface 8 of the communication device 7, in contact with the touch screen 2 of the communication terminal 1.

The method comprises then a step 101 of exchanging data between the communication device 7 and the communication terminal 1 through the touch screen 2.

The step 101 of exchanging data comprises first a step 102 of sending by the sending interface 8 of the communication device 10 of data encoded in a tactile signal to the input unit 3 via the touch screen. To that purpose, the sending interface 8 emulates the touch screen 2 according to a method described in the patent application EP n°11306814.2. The data send from the communication device to the communication terminal are called "uplink data". The uplink data corresponds to the data needed by the communication unit 5 to establish the communication channel with the communication device 7. These uplink data enable the communication unit 5 to identify the communication device 7. The uplink data can be the name of the communication device, its address, and/or one or several encryption keys enabling to encrypt the communication channel.

The step 101 of exchanging data comprises then a step 103 of reception of the uplink data by the input unit 3.

The step 101 of exchanging data may also comprise a step 104, performed by the output unit 6 of the communication terminal, of sending downlink data encoded in a visual signal via the touch screen 1. The downlink data can be encoded in flashes of light for example or by an encoding modulation of light for example. The downlink data can comprise the identity of the communication terminal. The step 101 of exchanging data comprises then a step 105 of reception by the receiving interface 9 of the communication device 7 of the downlink data.

The method comprises then a step 106 of transmission of the uplink data from the input unit 3 to the initialization unit 6 of the communication terminal 1.

The initialization unit 6 uses then these uplink data to configure the communication unit 5 of the communication terminal in a step 107. During step 107, according to one embodiment, the initialization unit 6 may use the exchanged data and/or other data to configure the communication unit 10 of the communication device, if needed. In the case where the communication terminal 1 has send downlink data to the communication device 7 via the touch screen, the method may also comprise a step 108 of transmission of the downlink data from the receiving interface 9 of the communication device 7 to the initialization unit 13 of the communication device. The initialization unit 13 of the communication device 7 uses at least some of the downlink data to configure the communication unit 10 of the communication device 7 during a step 109. The communication device can then authorize or refuse the establishment of the communication channel between the communication unit 5 of the communication terminal and the communication unit 10 of the communication device 7 in function of the identity of the communication terminal.

The man of the art will understand that the configuration of the wireless channel can be made on each side or on both sides, i.e. in the communication terminal and/or in the communication device. Such configuration of the wireless channel is made after the exchange of information through the touch screen interface. The exchange through the touch screen interface been necessarily made by a real contact, the user is aware of the connection and it is impossible to intercept the touch screen communication. So it becomes possible to exchange wireless communication parameters together with possible cryptography keys in a secure manner before starting the wireless communication.

The method comprises then a step 110 of establishing of a communication channel between the communication unit 5 of the communication terminal 1 and the communication unit 10 of the communication device 7.

Consequently, the method according to the invention enables to easily establish a wireless communication channel between a communication terminal having a touch screen and a communication device by just putting the communication device in contact with the touch screen. There is then no need to present the user with a list of the available communication devices: by just putting the communication device on the touch Screen of the communication terminal, the communication terminal is capable of retrieving the identity of the communication device to connect to. With the invention, the communication terminal has no 'doubt' concerning the identity of the communication device that wants to connect.

Advantageously, the information exchange can also be used to compute cryptographic keys in order to encrypt the Bluetooth low energy wireless channel.

While the present invention has been particularly described with reference to the preferred embodiments, it should be readily apparent to those of ordinary skill in the art that changes and modifications in form and details may be made without departing from the scope of the invention. For example, even if the invention has been described for the establishment of a Bluetooth low energy link, it could also be used with other wireless technology like Bluetooth, Zigbee or any other RF communication standard.

## Claims

1. Method for establishing a wireless communication channel between a communication device (7) and a communication terminal (1), the communication device (7) comprising a communication unit (10) and an exchanging interface (12) for communicating with a touch screen (2), the communication terminal comprising a touch screen (2) and a communication unit (5) able to be linked by a wireless communication channel to the communication unit (10) of the communication device (7), the method comprising the following steps:
- (100) Putting the communication device (7) in contact with the touch screen (2);
- (101) Exchanging data between the communication device (7) and the communication terminal (1) through the touch screen (2);
- (107, 109) Configuring at least one of the communication units (5, 10) with at least some of the exchanged data;
- (110) Establishing a communication channel between the communication unit (10) of the communication device (7) and the communication unit (5) of the communication terminal (1).

2. Method according to claim 1, wherein the step (101) of exchanging data through the touch screen (2) comprises a step (102) of receiving uplink data encoded in a tactile signal applied to the touch screen, and wherein the uplink data comprise one or several of the following information:
- A name of the communication device;
- An address of the communication device;
- At least one encryption key enabling to encrypt the communication between the communication terminal and the communication device.

3. Method according to claim 1, wherein the step of exchanging data comprises a step (104) of sending downlink data encoded in a visual signal emitted by the touch screen, and wherein the downlink data comprise one or several of the following information:
- A name of the communication terminal;
- An address of the communication terminal;
- At least one encryption key enabling to encrypt the communication between the communication terminal and the communication device.

4. Method according to any of the previous claims, wherein the wireless communication channel is a Bluetooth low energy link.

5. Communication terminal (1) comprising:
- A communication unit (5) able to be connected to a communication unit (10) of a communication device (7) through a wireless communication channel;
- A touch screen (2);
- An exchanging unit (11) configured to exchange data through the touch screen (2) with a communication device (7) in contact with the touch screen (2);
- An initialization unit (6) configured to configure at least one of the communication units (5, 10) with at least some of the exchanged data in order to establish a wireless communication channel between the communication unit (5) of the communication terminal (1) and the communication unit (10) of the communication device (7).

6. Communication terminal (1) according to claim 5, wherein the exchanging unit (11) comprises an input unit (3) configured to receive uplink data encoded in a tactile signal applied to the touch screen (2), and wherein the uplink data comprise one or several of the following information:
- A name of the communication device;
- An address of the communication device;
- At least one encryption key enabling to encrypt the communication between the communication terminal and the communication device..

7. Communication terminal (1) according to claim 5 or 6, wherein the exchanging unit (11) further comprises an output unit (4) configured to send downlink data encoded in a visual signal emitted by the touch screen (2), and wherein the downlink data comprise one or several of the following information:
- A name of the communication terminal;
- An address of the communication terminal;
- At least one encryption key enabling to encrypt the communication between the communication terminal and the communication device.

8. Communication device (7) comprising :
- a communication unit (10) able to be connected to a communication unit (5) of a communication terminal (1) comprising a touch screen (2) through a wireless communication channel;
- an exchanging interface (12) configured to exchange data with the communication terminal through the touch screen;
- an initialization unit (13) configured to configure at least one of the communication units (5, 10) with at least some of the exchanged data in order to establish a wireless communication channel between the communication unit (5) of the communication terminal (1) and the communication unit (10) of the communication device (7).

9. Communication device (7) according to claim 8, wherein the exchanging interface (12) comprises a sending interface (8) configured to send uplink data encoded in a tactile signal applied to a touch screen, wherein the uplink data comprise one or several of the following information:
- A name of the communication device;
- An address of the communication device;
- At least one encryption key enabling to encrypt the communication between the communication terminal and the communication device.

10. Communication device according to claim 8 or 9, wherein the exchanging interface (12) comprises a receiving interface (9) configured to receive downlink data encoded in a visual signal, and wherein the downlink data comprise one or several of the following information:
- A name of the communication terminal;
- An address of the communication terminal;
- At least one encryption key enabling to encrypt the communication between the communication terminal and the communication device.
